# EUROPEAN PATENT SPECIFICATION

(11) **EP 2 351 642 B1**
(45) Date of publication and mention of the grant of the patent: **21.02.2018**
(21) Application number: 08809616.9
(22) Date of filing: 29.08.2008
(51) Int. Cl.: B31B 70/84, B31B 70/04, B31B 155/00, B31B 160/10, B29C 35/04, B29C 65/18, B29C 65/74, B29C 65/78

(54) **RESIN BAG PRODUCTION EQUIPMENT**
KUNSTSTOFFBEUTELHERSTELLUNGSEINRICHTUNG
ÉQUIPEMENT DE PRODUCTION DE SAC DE RÉSINE

(43) Date of publication of application: 03.08.2011
(73) Proprietor: Mitsubishi Heavy Industries Machinery Systems, Ltd., Hyogo-ku, Kobe-shi Hyogo 652-8585 (JP)
(72) Inventor: ARAKI, Yozo, Nagoya-shi Aichi 453-0862 (JP); MIWA, Miyoshi, Nagoya-shi Aichi 453-0862 (JP); SHIMIZU, Makoto, Nagoya-shi Aichi 453-0862 (JP); OHASHI, Tsutomu, Nagoya-shi Aichi 453-0862 (JP); TAGUCHI, Masaki, Nagoya-shi Aichi 453-0862 (JP)
(74) Representative: Hoffmann Eitle
(86) International application number: PCT/JP2008/065549
(87) International publication number: WO 2010/023753

(56) References cited:
- JP-A- 6 211 218
- JP-A- 57 194 918
- JP-A- 2004 136 904
- JP-A- 2004 255 742
- JP-A- 2005 313 599
- JP-Y1- 41 017 424

## Description

### BACKGROUND OF THE INVENTION

### Field of the Invention

The present invention relates to resin bag manufacturing equipment for manufacturing a resin bag used as a container for a fluid such as a drip-feed solution.

### Description of the Related Art

Resin bags are used as containers for a liquid such as a drip-feed solution. Such a resin bag is formed of a soft resin film or the like and made up of a bag-shaped bag body having an opening at one side and a tubular port attached to the opening. The tubular port is made of hard resin and serves as a mouth through which a liquid is charged/discharged into/from the bag.

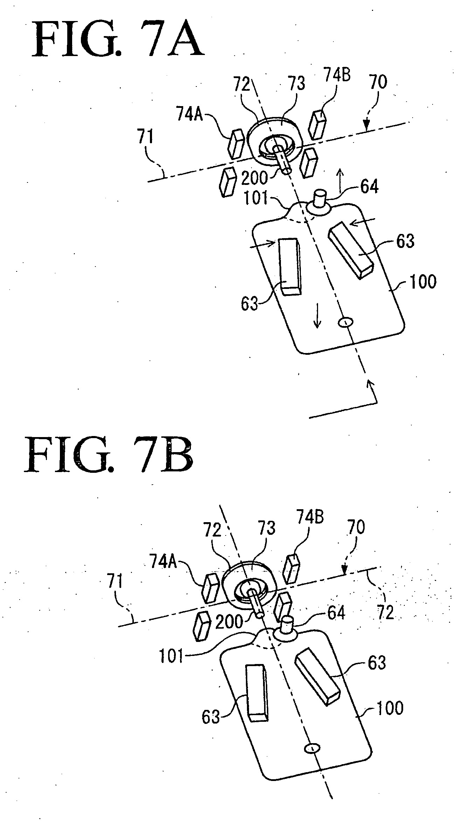

Conventionally, such a resin bag is made by setting a port between two ribbon-shaped films, bonding these two films and at the same time bonding the films and port in the opening with the port interposed between the two films (for example, see International Publication No. 2006/042710 (Fig. 7)).

However, the above described conventional manufacturing method involves problems like producing wrinkles in the film around the bonded part between the films and port, which spoils the appearance, and the films being drawn and preventing secure bonding, which results in insufficient sealing strength or appearance of a gap between the films and port.

One of the causes of such problems is that since bonding between the films along the outside shape of the container and bonding between the films and port are performed simultaneously, the length of the film is not enough to wrap around the entire perimeter of the round port, it is difficult to set an optimal temperature condition for bonding of both parts, and as a result, it is difficult to stabilize bonding quality of both parts.

Furthermore, the technique described in WO 2006/042710 cuts the film along the outside shape of the container in addition to bonding between the films along the outside shape of the container and bonding between the films and port, which complicates a die for bonding and cutting and makes it difficult to optimally set not only the bonding condition but also the cutting condition.

Another cause is that while bonding between the films along the outside shape of the container is two-dimensional bonding, bonding between the films and port is three-dimensional bonding, and therefore when the die for bonding is pressed against the neighborhood of the boundary between the two-dimensional bonding part and the three-dimensional bonding part, the films are drawn and become thinner or wrinkles easily occur in the films.

Such technical problems are already solved by JP 2004 136904 A which represents the closest prior art.

The present invention is also based on such technical problems and it is the object of the present invention to provide resin bag manufacturing equipment capable of manufacturing a resin bag reliably and with high quality.

### SUMMARY OF THE INVENTION

Such an object is attained by a resin bag manufacturing equipment with the features of claim 1. Preferred embodiments follow from the other claims.

The inventive resin bag manufacturing equipment for manufacturing a resin bag into which a fluid is charged includes a bag body bonding apparatus that forms an opening at only one side of a pair of films unreeled from a roll and bonds a remaining entire perimeter to form a bag body, a cutting apparatus that cuts the films along an outside shape of the bag body, an opener that opens the opening of the bag body, and a port bonding apparatus that inserts a tubular port into the opening formed by the opener and bonds the opening and the port.

In this way, the bag body bonding apparatus forms an opening only at one side of the films, bonds the remaining entire perimeter and forms the bag body, and therefore this bonding is two-dimensional bonding, makes the films less wrinkled and allows the films to be bonded without being drawn.

Furthermore, the port bonding apparatus needs only to perform three-dimensional bonding with the port inserted into the opening of the bag body, and since the films are pushed widthwise in the direction orthogonal to the axial line of the tubular port, the films are hardly wrinkled even with three-dimensional bonding, preventing the film from becoming thinner.

In addition, as for the opening of the bag body formed by the bag body bonding apparatus, since the port bonding apparatus inserts the port into the opening formed by the opener, it is possible to automate the entire process of manufacturing the resin bag.

Here, the opener is provided with a pair of plate members that is pressed against both sides of the opening and clamps the bag body on both sides of the opening from both surfaces of the bag body and a widthwise approaching mechanism that moves the plate members on both sides of the opening to a central portion of the opening while pressing the plate members against the bag body and opens the opening. In this way, the opening can be opened by pushing the opening from both sides.

Furthermore, the opener can also be provided with a suction cup that suctions the bag body in a central portion of the pair of plate members and a suction cup drive mechanism that lifts the suction cup away from the surface of the bag body. Lifting the suction cup that suctions the bag body in the central portion with the pair of plate members pressed against the bag body allows the opening to be opened more reliably.

The resin bag manufacturing equipment of the present invention is further provided with a bag body transfer apparatus that transfers the bag body from the bag body bonding apparatus to the opener. The bag body transfer apparatus is provided with a flat plate to be inserted into the opening and a clamp member that clamps the bag body from both surfaces and the bag body bonding apparatus performs bonding with the plate inserted between the pair of films.

Since bonding is conducted with the plate inserted between the films, the plate remains inserted in the opening after the bonding. Clamping the bag body using the clamp member allows the bag body to be held. If the plate would be inserted into the opening after the bag body was formed, the opening would need to be opened and it is easily estimable that this may complicate the mechanism and cause the opening not to be opened reliably. By adopting the above described configuration, it is possible to avoid such a problem and speedily transfer the bag body using the bag body transfer apparatus.

Moreover, leaving the plate inserted in the opening can prevent both sides of the films from sticking to each other in the middle of the process and allows the opener to easily open the opening in a post-process.

In addition, if the clamp member is adapted so as to clamp the bag body from both sides of the plate inserted into the opening and to be provided with a protrusion dug into the bag body, it is possible to form a protrusion in the film at the opening. By doing so, it is possible to prevent both sides of the films of the opening from sticking to each other and this also allows the opener to easily open the opening in a post-process.

The resin bag manufacturing equipment of the present invention is further provided with a port transfer apparatus that transfers the port to be inserted into the opening of the bag body by the port bonding apparatus. This port transfer apparatus is provided with a port holder in which the tubular port is inserted and held. The port bonding apparatus inserts the port held by the port holder into the opening of the bag body opened by the opener and performs bonding. The port transfer apparatus transfers the bag body where the opening and the port are bonded to a post-process while holding the port.

This allows the port bonded to the bag body to be transferred to a post-process while holding the port inserted into and bonded to the bag body.

A port preheater is further provided which preheats the port held by the port holder of the port transfer apparatus before transferring the port to the port bonding apparatus.

In this case, the port preheater is preferably provided with a port rotation mechanism that rotates the port holder holding the port. This allows the entire perimeter of the port to be uniformly preheated. Any configuration may be adopted for the port rotation mechanism, but a configuration capable of rotating the port holder only when preheating is conducted is preferable taking into consideration that the port will be held and transferred to a post-process. Therefore, the port holder may be provided with a gear and a roller and the port preheater may be provided with a drive gear and a drive roller to rotate this gear and roller and the port holder may be rotated by pressing the drive gear and the drive roller against the gear and roller of the port holder.

The bag body bonding apparatus and the cutting apparatus share a die having a bonding part that bonds the film and a cutting part that cuts the film, which is preferable from the standpoint of the die manufacturing cost. In this case, the cutting part preferably cuts the film by leaving a portion of the film in a thickness direction instead of completely cutting the film and keeps the mutually neighboring bag bodies connected. This eliminates the necessity for severely adjusting the cutting condition for the cutting part as in the case of completely cutting the film and attention may be focused on a setting of the bonding condition for the bonding part, and it is thereby possible to reduce time and trouble of adjustment and cost or the like.

A separator may be provided in a post-process of the cutting apparatus to separate the mutually neighboring bag bodies which are connected through the portion of the film in the thickness direction.

In accordance with the present invention, the bag body bonding apparatus forms an opening at only one side of the films and bonds the remaining entire perimeter to form a bag body, which makes bonding two-dimensional bonding and prevents the film from being easily wrinkled. Furthermore, the port bonding apparatus performs bonding on the opening of the bag body and needs only to conduct three-dimensional bonding with the port inserted in the opening, and since the bonding line is orthogonal to the axial line of the tubular port, even three-dimensional bonding produces fewer wrinkles in the film. In this way, the respective sections allow bonding to be conducted under optimal conditions, and it is thereby possible to prevent the film from being wrinkled around the bonded part between the bag body and the port, prevent the appearance from being spoiled and prevent gaps from being produced due to a failure of reliable bonding and manufacture a resin bag reliably and with high quality.

Furthermore, as for the opening of the bag body formed by the bag body bonding apparatus, since the port is inserted by the port bonding apparatus into the opening opened by the opener, it is possible to automate the entire process of manufacturing a resin bag. In this case, the opening can be reliably opened by the opener by moving the plate members toward the central portion of the opening with the plate members pressed against both sides of the opening, suctioning the bag body in an intermediate part between the pair of plate members, inserting the plate between the two films when forming the bag body and forming a protrusion in the film.

Furthermore, when the bag body bonding apparatus and the cutting apparatus share the die having a bonding part that bonds the film and a cutting part that cuts the film, the cutting part preferably does not completely cut the film but cuts the film leaving a portion in the thickness direction of the film and keeps the mutually neighboring bag bodies connected. This eliminates the necessity for severely adjusting the cutting condition by the cutting part as in the case of completely cutting the film and attention may be focused on a setting of the bonding condition for the bonding part, and it is thereby possible to reduce time and trouble of adjustment and cost or the like.

### BRIEF DESCRIPTION OF THE DRAWINGS

FIG. 1 shows a schematic configuration of resin bag manufacturing equipment according to an embodiment of the present invention;
FIG. 2 is a perspective view showing a configuration of bonding/cutting apparatus;
FIG. 3 is a perspective view of a clamp unit of the bag body transfer apparatus;
FIG. 4 is a perspective view of the opener;
FIGs. 5A and 5B show a series of steps for making an opening in the bag body by the opener; FIG. 5A showing the bag body located between the plate members and FIG. 5B showing the bag body interposed between the plate members;
FIGs. 6A and 6B show steps following FIGs. 5A and 5B; FIG. 6A showing a state in which the bag body is withdrawn from the bag body transfer apparatus and FIG. 6B showing a state in which the bag body is moved to the port bonding apparatus;
FIGs. 7A and 7B show steps following FIGs. 6A and 6B; FIG.7A showing a state in which the plate members are pushed widthwise to open the opening and FIG.7B showing a state in which the bag body is brought closer to the port;
FIG. 8 is a perspective view of a holder unit of the port transfer apparatus;
FIG. 9 is a perspective view of the port preheater;
FIGs. 10A and 10B show steps following FIGs. 7A and 7B; FIG. 10A showing a state in which the port is inserted into the opening of the bag body and FIG. 10B showing a state in which the opening in which the port is inserted is bonded; and
FIGs. 11A and 11B show steps following FIGs. 10A and 10B; FIG. 11A showing a state in which the clamping of the bag body by the plate members is released and FIG. 11B showing a state in which the port sealing die is detached from the bag body.

### DETAILED DESCRIPTION OF THE PREFERRED EMBODIMENTS

With reference now to the attached drawings, an embodiment of the present invention will be explained in detail below.

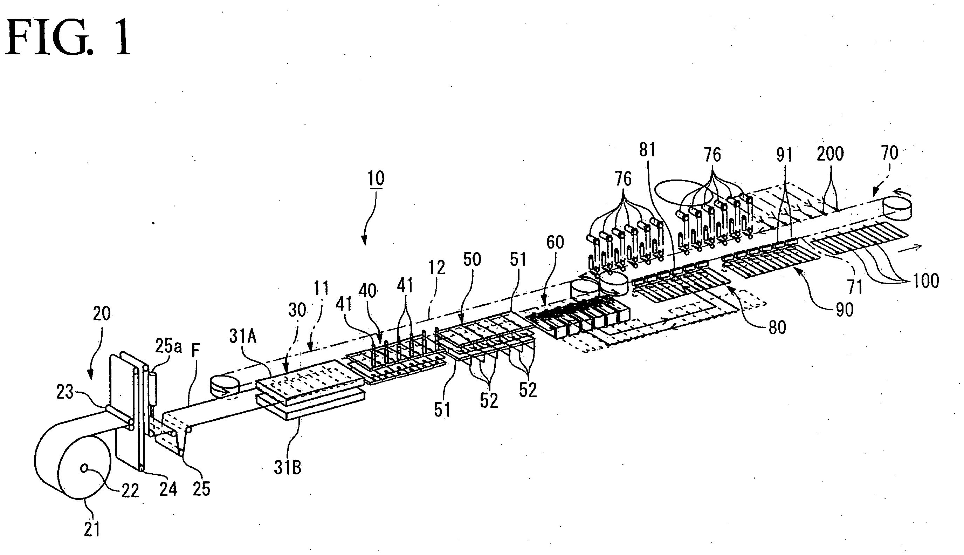

FIG. 1 illustrates a schematic configuration of resin bag manufacturing equipment 10 according to an embodiment of the present invention.

The resin bag manufacturing equipment 10 is provided with a film feeder 20 that feeds a ribbon-shaped film F, a bonding/cutting apparatus (bag body bonding apparatus, cutting apparatus) 30 that bonds three sides of the film F fed from the film feeder 20 and cuts the film F along an outside shape of the resin bag, a cooler/remover 40 that cools the bonded part by the bonding/cutting apparatus 30 and removes unnecessary portions from the film F, a bag separator (separation apparatus) 50 that separates the film F at cutting parts into individual bag bodies 100, an opener 60 that opens one side not bonded of the separated bag bodies 100, a port transfer apparatus 70 that supplies a port 200 to an opening 101 of the bag body 100 made by the opener 60, a port bonding apparatus 80 that bonds the port 200 supplied from the port transfer apparatus 70 to the opening 101 of the bag body 100 and a port cooler 90 that cools the bonded part between the bag body 100 and the port 200 in that order.

The film feeder 20 is provided with a raw film material roller 22 that holds a raw film material roll (roll) 21 of a two-ply ribbon-shaped film F, a nip roller 23 that unreels the film F from the raw film material roll 21, a dancer roll 24 that gives/adjusts tension of the unreeled film F and a backward dancer roll 25 for causing the film F to retrocede in the direction opposite to the unreeling direction by making the film F move up and down in the direction orthogonal to the surface of the film F by an air cylinder 25a.

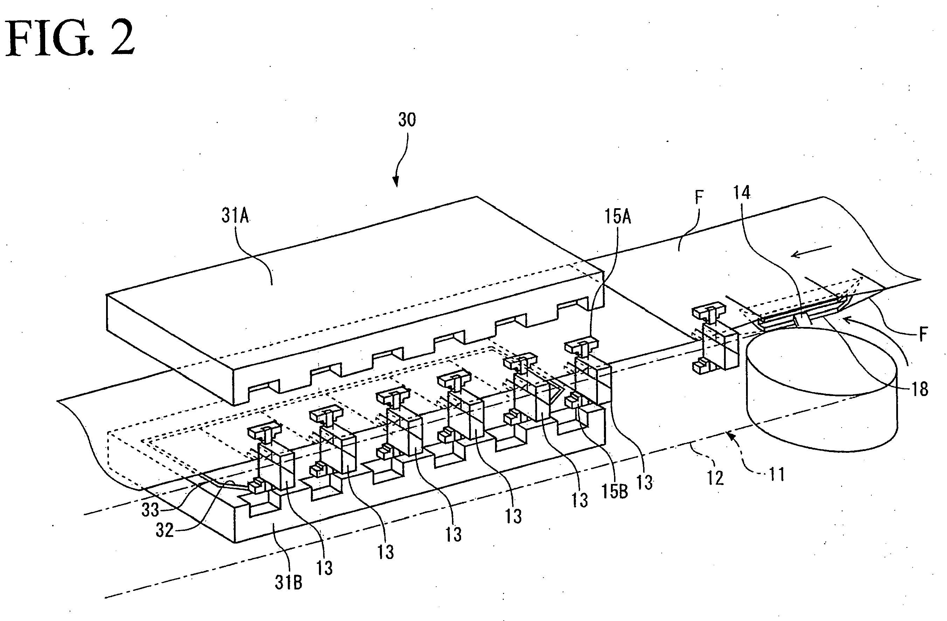

As shown in FIG. 2, the bonding/cutting apparatus 30 is provided with a pair of dies 31A and 31B located above and below the film F and a die drive mechanism (not shown) that drives the dies 31A and 31B to move up and down.

The dies 31A and 31B are provided with a bonding part 32 that bonds three sides of the bag body 100 other than the opening 101 for bonding the port 200 and a cutting part 33 that cuts the film F along the outside shape of the bag body 100 on the perimeter side of the bonding part 32. According to the present embodiment, one set of dies 31A and 31B are provided with the bonding parts 32 and cutting parts 33 corresponding to six bag bodies 100.

The bonding part 32 and cutting part 33 have a convex shape protruding from the dies 31A and 31B, are heated by a heater and bond and cut two films F respectively when pressed against the films F. Here, the cutting part 33 does not completely cut the film F but leaves a portion in the thickness direction thereof uncut. In this way, the mutually neighboring bag bodies 100, 100 are not separated from each other and transferred to a post-process as one connected piece.

A bag body transfer apparatus 11 is provided facing the bonding/cutting apparatus 30. The bag body transfer apparatus 11 has an endless belt 12 provided with a plurality of clamp units 13 located at predetermined intervals. Each clamp unit 13 moves along the orbit of the belt 12 by driving the belt 12 to circulate using a motor (not shown) or the like.

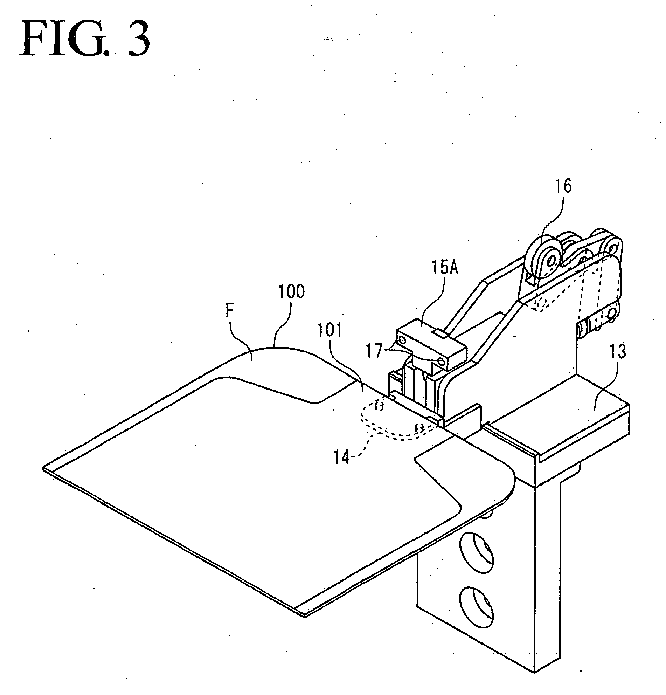

As shown in FIG. 3, the clamp unit 13 is constructed of a flat plate 14 to be inserted into the opening 101 with which the port 200 is bonded in a post-process for the bag body 100 bonded by the bonding/cutting apparatus 30, a pair of clamp members 15A and 15B (see FIG. 2 for the clamp member 15B) that clamp the bag body 100 so as to sandwich the plate 14 when the plate 14 is inserted into the opening 101 and a drive section 16 that drives these clamp members 15A and 15B to open or close.

The clamp members 15A and 15B are provided with pointed protrusions 17, 17 and when the clamp members 15A and 15B are closed and the bag body 100 is clamped, these protrusions 17, 17 are designed to dig into the bag body 100. At the opening 101 of the bag body 100, convex parts which form convex shapes in mutually facing directions are formed in the two films F by the protrusions 17, 17, which prevents the two films F from sticking to each other when the plate 14 is pulled out later and which makes it possible to easily open the opening 101 in a post-process. Furthermore, when the protrusions 17, 17 are dug into the bag body 100, the bag body 100 can be reliably clamped and held.

Furthermore, as shown in FIG. 2, a guide 18 is provided upstream of the bonding/cutting apparatus 30 to make a gap between the two films F, F of the two-ply film F. Downstream of the guide 18, the plate 14 is inserted into the gap formed between the two films F, F by the guide 18.

Such clamp units 13 clamp the film F when the bonding/cutting apparatus 30 bonds and cuts three sides of the film F. That is, the clamp units 13 are provided at an interval corresponding to the pitch of six bag bodies 100 between the dies 31A and 31B.

As shown in FIG. 1, such a bag body transfer apparatus 11 is provided with the belt 12 along these apparatuses so as to transfer the bag body 100 from the bonding/cutting apparatus 30 to the opener 60.

The cooler/remover 40 cools the bag body 100 and fixes the bonded part. For cooling of the bag body 100, various appropriate techniques can be adopted such as pressing a plate cooled by a refrigerant such as a liquid against the bag body 100 or spraying a gas such as air.

Furthermore, the cooler/remover 40 removes unnecessary parts other than the bag body 100 from the film F. Removal of the unnecessary parts can be done by gripping the unnecessary parts of the film F using a chuck member (not shown) or the like and pulling out the unnecessary parts using a cylinder apparatus or the like. The removed film F is ejected at an appropriate location by opening the chuck member. When a hole or the like for hanging a resin bag as a finished product is formed, the hole is formed by the bonding/cutting apparatus 30 in a preceding process simultaneously with the bonding and cutting and the hole is pierced by a needle 41 at the cooler/remover 40 to remove the portion corresponding to the hole.

The bag separator 50 separates the plurality of bag bodies 100 which are connected to each other by portions remaining in the thickness direction into the individual bag bodies 100. Separation is performed by clamping the individual bag bodies 100 using clamping plates 51, pushing up flat separators 52 between the mutually neighboring bag bodies 100, 100, further moving the backward dancer roll 25 through the air cylinder 25a in the direction orthogonal to the surface of the film F, causing the film F to retrocede toward the raw film material roll 21 and pulling the film F, and thereby cutting the portion in the thickness direction of the film F remaining between the mutually neighboring bag bodies 100, 100.

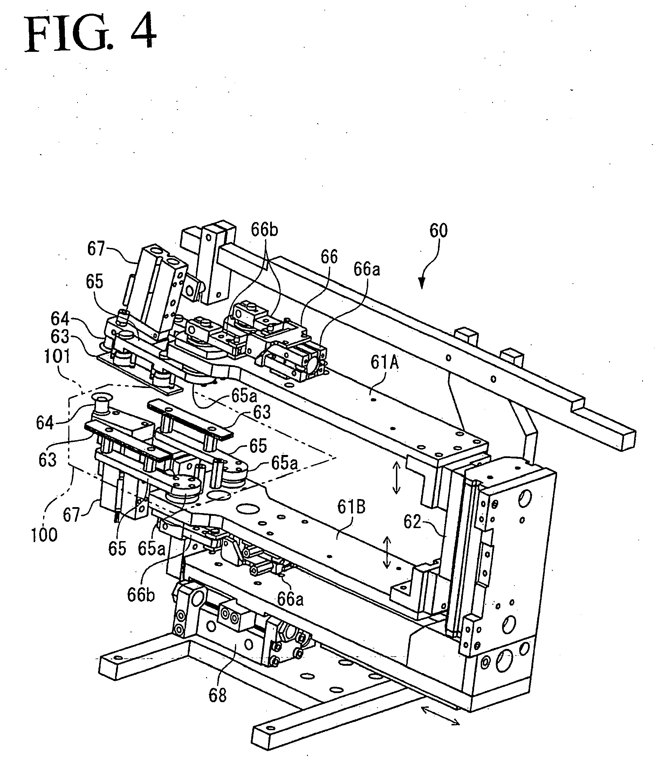

The opener 60 holds the separated bag body 100 and opens the opening 101 which is the non-bonded part of the bag body 100. For this purpose, as shown in FIG. 4, an upper frame 61A and a lower frame 61B are arranged substantially in parallel so as to be located above and below the bag body 100 transferred by the bag body transfer apparatus 11. The upper frame 61A and lower frame 61B are moved closer to or away from each other in the vertical direction by a nip cylinder 62.

A pair of plate members 63, 63 and a suction cup 64 are provided on the under side at an end of the upper frame 61A and the upper side at an end of the lower frame 61B respectively.

The upper and lower plate members 63, 63 are arranged so as to be pressed against both sides of the opening 101 of the bag body 100 respectively and the upper and lower plate members 63, 63 can clamp the bag body 100 from both sides of the opening 101 when the nip cylinder 62 causes the upper frame 61A and lower frame 61B to come closer to each other.

Furthermore, the upper and lower plate members 63, 63 are provided on arms 65, 65 that pivot around bases 65a, 65a respectively, and a drive mechanism (widthwise approaching mechanism) 66 made up of an air cylinder 66a and a link mechanism 66b causes the arms 65, 65 to pivot synchronously to thereby cause the plate members 63, 63 to move closer to or away from each other. That is, the opening 101 can be opened by rotating the arms 65, 65 in a direction in which the plate members 63, 63 come closer to each other when the opening 101 of the bag body 100 is clamped.

The suction cups 64 are intermediate parts between the pair of plate members 63, 63 and arranged so as to face each other in the vicinity of an end of the film of the opening 101 of the bag body 100 transferred by the bag body transfer apparatus 11. The suction cups 64 located above and below are moved up and down by air cylinders (suction cup drive mechanisms) 67 and the opening 101 is opened when the upper and lower suction cups 64, 64 move away from each other while suctioning the opening 101 of the bag body 100.

Furthermore, the above described upper frame 61A and lower frame 61B can be moved forward or backward by a traveling cylinder 68 in the direction orthogonal to the direction in which the bag body 100 is transferred by the bag body transfer apparatus 11.

Six sets of such upper frames 61A and lower frames 61B are provided in correspondence with the dies 31A and 31B. The upper frame 61A and lower frame 61B are movable along a guide (not shown) between a position facing the bag body transfer apparatus 11 and the port bonding apparatus 80.

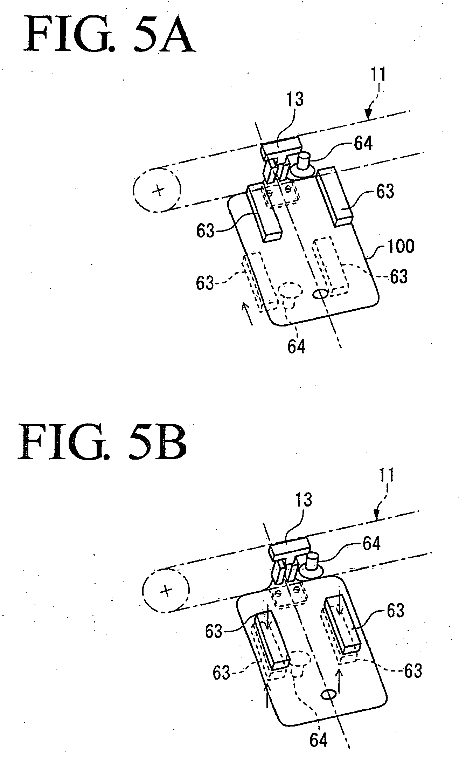

In the opener 60, as shown in FIG. 5A, at a position facing the bag body transfer apparatus 11, the upper frame 61A and the lower frame 61B are first moved forward (direction shown by the arrow in the figure) by the traveling cylinder 68 in FIG. 4 with respect to the bag body 100 held by the clamp unit 13 of the bag body transfer apparatus 11 and the upper and lower plate members 63, 63 are made to face the opening 101 above and below.

Next, as shown in FIG. 5B, the nip cylinder 62 in FIG. 4 causes the upper frame 61A and the lower frame 61B to move closer to each other and the upper and lower plate members 63, 63 clamp the bag body 100. After the clamping by the upper and lower plate members 63, 63, the clamping of the bag body 100 by the clamp members 15A, 15B of the clamp unit 13 is released.

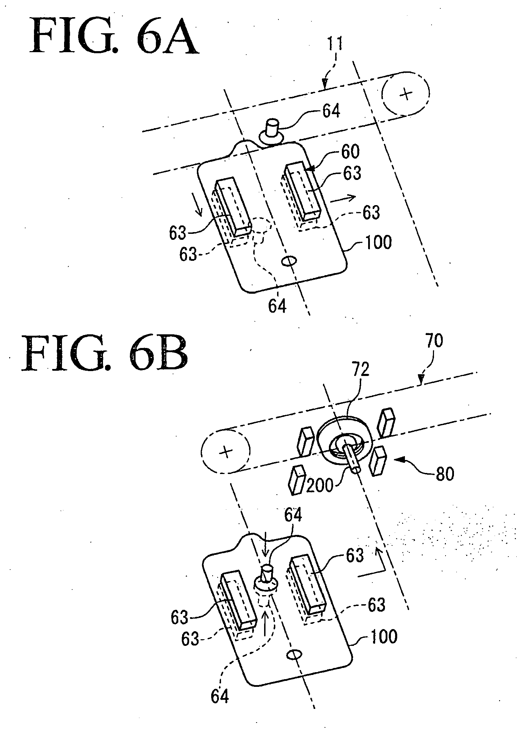

As shown in FIG. 6A, the upper frame 61A and the lower frame 61B are moved backward by the traveling cylinder 68 in FIG. 4 and the bag body 100 held by the upper and lower plate members 63, 63 is detached from the clamp unit 13 of the bag body transfer apparatus 11. This causes the bag body 100 to be transferred from the clamp unit 13 to the opener 60.

After this, as shown in FIG. 6B, the suction cups 64 are made to suction the bag body 100 through the upper and lower air cylinders 67. As shown in FIG. 1, the upper frame 61A and the lower frame 61B are moved from the position facing the bag body transfer apparatus 11 to the port bonding apparatus 80. Simultaneously with this operation, as shown in FIG. 7A, the arms 65, 65 are rotated in the direction in which the upper and lower plate members 63, 63 come closer to each other to realize widthwise approaching, the upper and lower suction cups 64 are moved away from each other by the air cylinders 67 to open the opening 101.

The port 200 is supplied from the port transfer apparatus 70 to the bag body 100 held by the opener 60 as described above and transferred to the port bonding apparatus 80 with the opening 101 left open.

Here, the port transfer apparatus 70 will be explained.

The port transfer apparatus 70 is provided with a plurality of holder units 72 on an endless belt 71 at predetermined intervals. Each holder unit 72 is moved along the orbit of the belt 71 by driving the belt 71 to circulate using a motor (not shown) or the like.

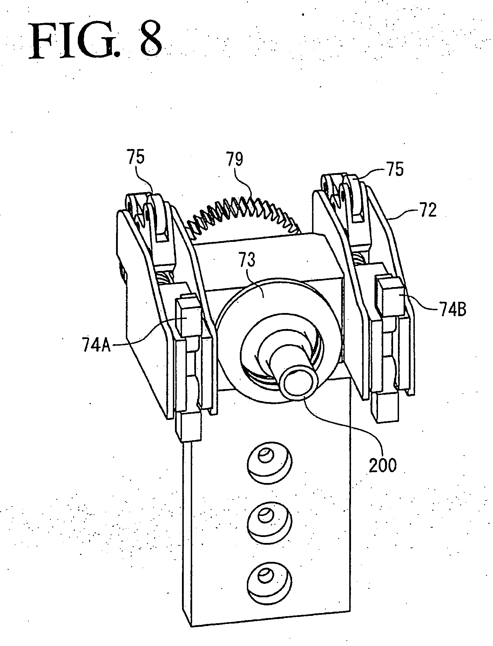

As shown in FIG. 8, each holder unit 72 is provided with a port holder 73 having an insertion hole (not shown) through which the port 200 is supplied by a port feeder (not shown).

Furthermore, on both sides of the port holder 73 are a pair of clamp members 74A, 74B for clamping the bag body 100 with which the port 200 is bonded and drive sections 75 for driving the clamp members 74A, 74B to open or close.

As shown in FIG. 1, with such a holder units 72, the port 200 supplied from the port feeder (not shown) is inserted into the port holder 73. Each holder unit 72 transfers the port 200 held to a post-process along the orbit of the belt 71 through the circulation driving of the belt 71.

The port 200 transferred by the holder unit 72 is first transferred to a port preheater 76.

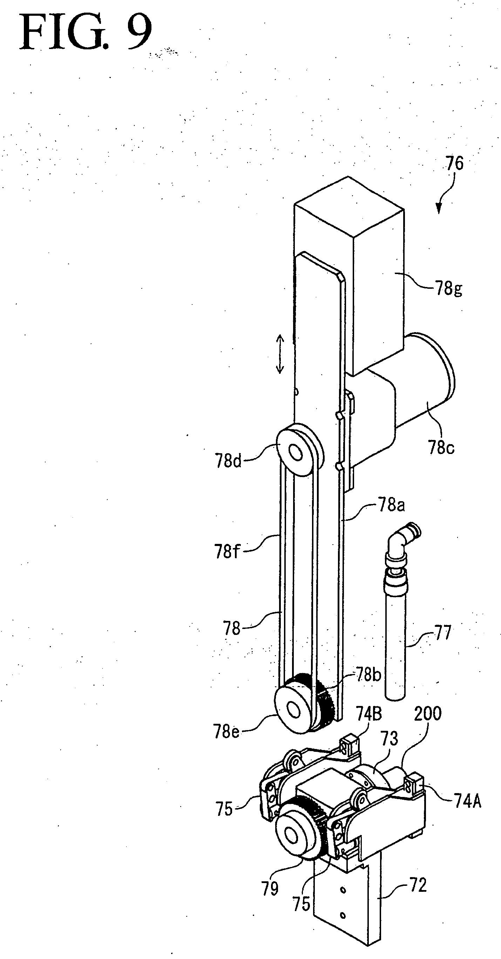

As shown in FIG. 9, the port preheater 76 is provided with an air heater 77 that jets hot air to preheat the port 200 held by the holder unit 72 and a port rotation mechanism 78 that rotates the port holder 73 holding the port 200.

As for the port rotation mechanism 78, a plate 78a is provided with a gear 78b, a motor 78c that drives the gear 78b to rotate, pulleys 78d, 78e and a belt 78f to transmit the torque of the motor 78c to the gear 78b and this plate 78a is driven by an air cylinder 78g to move in the vertical direction.

On the other hand, the holder unit 72 is provided with the aforementioned port holder 73 in a manner pivotable around the axis of the port 200 held and is further provided with a gear 79 coaxial with the port holder 73. This gear 79 is designed to engage with the gear 78b when the plate 78a of the port rotation mechanism 78 is lowered by the air cylinder 78g. Driving the motor 78c drives the port holder 73 to rotate.

In this way, while the port rotation mechanism 78 is rotating the port 200 held by the port holder 73, the air heater 77 blows hot air over the port 200 and the port 200 is thereby uniformly preheated.

As shown in FIG. 1, six such port preheaters 76 are provided in correspondence with the dies 31A and 31B, and moreover, this embodiment provides two sets of six port preheaters to allow two-stage preheating.

The port 200 preheated by the port preheater 76 is transferred to the port bonding apparatus 80 while being held by the holder unit 72.

As shown in FIG. 7A, the bag body 100 held by the opener 60 and with the opening 101 left open, faces the port 200 held by the holder unit 72.

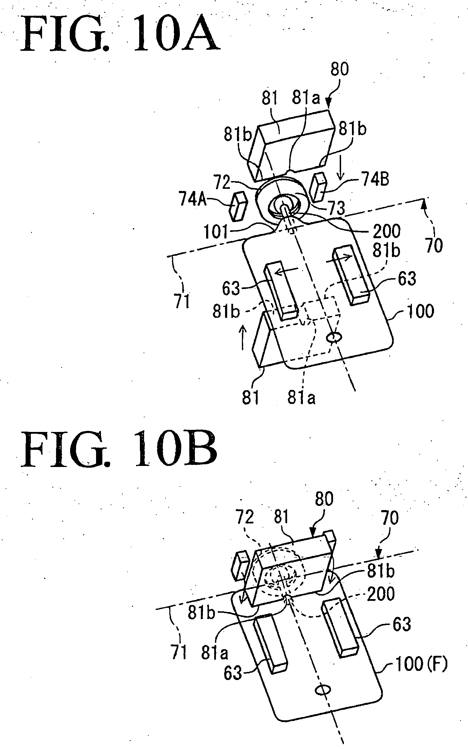

Next, as shown in FIG. 7B, the suction by the upper and lower suction cups 64, 64 is turned OFF and the upper frame 61A and the lower frame 61B are moved forward by the traveling cylinder 68 in FIG. 4. As shown in FIG. 10A, the port 200 held by the holder unit 72 is inserted into the opening 101 of the bag body 100. At this moment, even when the suction by the upper and lower suction cups 64, 64 is turned OFF, the opening 101 is kept open through widthwise approaching by the upper and lower plate members 63, 63.

Next, the upper and lower plate members 63, 63 are rotated and made open to release the widthwise approaching of the opening 101. In this condition, the opening 101 of the bag body 100 and the port 200 inserted into the opening 101 are bonded by the port bonding apparatus 80. For this purpose, the port bonding apparatus 80 is provided with a pair of upper and lower port sealing dies 81, 81. The port sealing die 81 is provided with a semicircular recessed part 81a corresponding to the outside shape of the port 200 and flat parts 81b, 81b on both sides thereof facing the bag body 100. These port sealing dies 81, 81 are heated by a heater (not shown) to within a predetermined temperature range. Furthermore, the port sealing dies 81, 81 are driven to move up and down by an air cylinder (not shown) or the like to move closer to or away from the bag body 100 and port 200.

As shown in FIG. 10B, in such a port bonding apparatus 80, the upper and lower port sealing dies 81, 81 are moved closer to each other and pressed against the bag body 100 and port 200. The recessed part 81a then bonds the opening 101 and the port 200 inserted therein and the flat parts 81b, 81b on both sides bond the two films F on both sides of the opening 101. In this way, the port 200 is bonded to the bag body 100 and a resin bag is formed. At this moment, the three sides of the bag body 100 have already been bonded and when the opening 101 and port 200 are bonded, the film F making up the bag body 100 is hardly wrinkled.

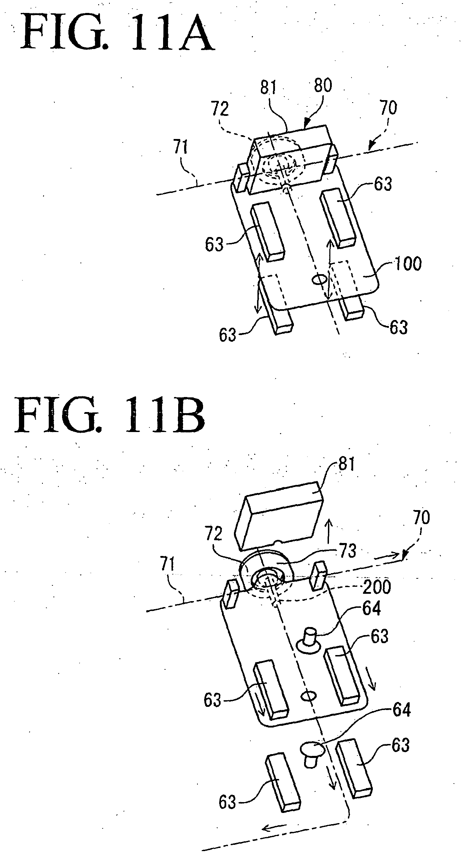

After the bonding is completed, as shown in FIG. 11A, the upper frame 61A and the lower frame 61B are moved away from each other by the nip cylinder 62 in FIG. 4 and the clamping of the bag body 100 by the upper and lower plate members 63, 63 is released.

After this, the upper frame 61A and the lower frame 61B return to the positions facing the bag body transfer apparatus 11.

Next, as shown in FIG. 11B, the upper and lower port sealing dies 81, 81 are moved away from each other and detached from the bag body 100 and port 200. In this condition, the bag body 100 is bonded to the port 200 and held by the holder unit 72.

After this, the holder unit 72 is moved by circulation driving of the belt 71 and the bag body 100 (resin bag) to which the port 200 is bonded is transferred to the port cooler 90.

In the port cooler 90, the bonded part between the port 200 and bag body 100 is cooled by cooling blocks 91, 91 or blowing of cooling air. When the cooling blocks 91, 91 are used, the cooling blocks 91, 91 have the same shape and operation as those of the port sealing dies 81, 81, the cooling blocks 91, 91 are cooled to a temperature sufficiently lower than the bonding temperature and pressed against the bonded part between the port 200 and bag body 100 from both sides for cooling.

After this, the resin bag in which the port 200 and the bag body 100 are bonded is transferred to a filling step which is a post-process, charging of filling stuff from the port 200 into the bag body 100 and capping of the port 200 or the like may be performed.

As described above, after the entire perimeter of the bag body 100 other than the opening 101 is bonded by the bonding/cutting apparatus 30, the port 200 is inserted into the opening 101, and the opening 101 and port 200 are bonded by the port bonding apparatus 80. This allows the bonding/cutting apparatus 30 to perform two-dimensional bonding and prevents the film F from wrinkling. Furthermore, the port bonding apparatus 80 needs only to perform three-dimensional bonding with the port 200 inserted into the opening 101 of the bag body 100, and moreover, the port sealing die 81 having the recessed part 81a and flat parts 81b provides a bonding line in the direction substantially orthogonal to the axial line of the tubular port 200, and therefore though the length of the film F in the width direction is shortened by the amount corresponding to the portion wrapped around the entire perimeter of the port 200, both ends of the film F can be brought closer to each other even with three-dimensional bonding and the film F is thereby hardly wrinkled.

In this way, it is possible to prevent the film F from being wrinkled around the bonded part between the bag body 100 and port 200 which may spoil the appearance, prevent gaps from being produced due to a failure to realize reliable bonding and manufacture a resin bag reliably and with high quality.

Furthermore, it is possible to automatically insert the port 200 held by the holder unit 72 of the port transfer apparatus 70 into the opening 101 of the bag body 100 with the opening 101 opened by the opener 60 and thereby automate the entire manufacturing process of the resin bag.

In this case, by pressing the plate members 63, 63 against both sides of the opening 101 and moving the plate members 63, 63 toward the center of the opening 101, suctioning the bag body 100 by the suction cups 64 in the intermediate part between the plate members 63, 63, inserting the plate 14 between the two films F at the stage of bonding and forming the bag body 100 by the bonding/cutting apparatus 30 and forming protrusions on the film F of the opening 101 by the protrusions 17 provided on the clamp members 15A, 15B, it is possible to reliably open the opening 101 by the opener 60.

Furthermore, by interposing the plate 14 between the two films F at the stage of bonding and forming the bag body 100 using the bonding/cutting apparatus 30, the plate 14 remains inserted in the opening 101 after bonding. By clamping the bag body 100 using the clamp members 15A, 15B, the bag body 100 can be held as it is. In this way, the bag body 100 can be held and transferred speedily.

In addition, in the port bonding apparatus 80, the port 200 to be inserted into the opening 101 of the bag body 100 is held by the port holder 73 of the port transfer apparatus 70 and transferred and supplied. After the port 200 is inserted into the opening 101 of the bag body 100 and bonded by the port bonding apparatus 80, it is possible to transfer the bag body 100 with which the port 200 is bonded to a post-process with the port 200 held by the port transfer apparatus 70.

Furthermore, the bonding/cutting apparatus 30 has the bonding part 32 that bonds the film F to the dies 31A and 31B and the cutting part 33 that cuts the film F, and the cutting part 33 cuts the film F by leaving part of the film F in the thickness direction instead of completely cutting the film F and keeps the mutually neighboring bag bodies 100 connected to each other. Therefore, the cutting condition by the cutting part 33 need not be severely adjusted as in the case where the film F is completely cut and attention is focused on a setting of conditions for bonding by the bonding part 32 and it is thereby possible to reduce time and trouble for adjustment and cost or the like.

The above described embodiment has illustrated the configuration of the components of the resin bag manufacturing equipment 10, but it is possible to adopt any configurations other than that described above as long as the required functions can be realized within a range not departing from the essence of the present invention.

## Claims

1. Resin bag manufacturing equipment for manufacturing a resin bag into which a fluid is charged, comprising:
a film feeder (20) holding a pair of films on a film material roll (21);
a bag body bonding apparatus (30) for forming an opening (101) at only one side of a pair of films (F) unreeled from the film material roll (21) and for bonding a remaining entire perimeter to form a bag body (100);
a cutting apparatus (30) for cutting the films (F) along an outside shape of the bag body (100);
an opener (60) for opening the opening of the bag body (100);
a port bonding apparatus (80) for inserting a tubular port (200) into the opening (101) opened by the opener (60) and for bonding the opening (101) and the port (100) ;
a port transfer apparatus (70) that comprises a port holder (73) in which the tubular port to be inserted into the opening (101) of the bag body (100) by the port bonding apparatus (80) is adapted to be inserted and held by the port bonding apparatus (80) and for transferring the port (200) held by the port holder (73); and
a port preheater (76) for preheating the port (200) held by the port holder (73) of the port transfer apparatus (70) before transferring the port (200) to the port bonding apparatus (80),
wherein the opener (60) comprises:
a pair of plate members (63) that is pressed against both sides of the opening (101) on both surfaces of the bag body (100); and
a widthwise approaching mechanism (66) for moving the plate members (63) on both sides of the opening (101) toward a central portion of the opening (101) while pressing the plate members (63) against the bag body (100) and for opening the opening (101),
wherein:
the port bonding apparatus (80) is adapted for inserting the port (200) preheated by the port preheater (76) and held by the port holder (73) into the opening (101) of the bag body (100) and for performing bonding;
**characterized in that**
the port transfer apparatus (70) is adapted for transferring the bag body (100) where the opening (101) and the port (200) are bonded to a post-process while holding the port (200); wherein
the resin bag manufacturing equipment further comprises a bag body transfer apparatus (11) with an endless belt (12) for
transferring the bag body (100) from the bag body bonding apparatus (30) to the opener (60); wherein
the bag body transfer apparatus (11) comprises a flat plate (14) to be inserted into the opening (101) and a clamp member (13) for clamping the bag body (100) from both surfaces, and the bag body bonding apparatus (30) is adapted for performing bonding with the plate (14) inserted between the pair of films (F); and the opener (60) is adapted for holding the bag body (100) and for opening the opening (101) while the bag body (100) is transferred from the bag body transfer apparatus (11) to the port bonding apparatus (80).

2. The resin bag manufacturing equipment according to claim 1, wherein the opener (60) comprises:
a suction cup (64) for suctioning the bag body (100) in a central portion of the pair of plate members (63); and
a suction cup drive mechanism (67) for lifting the suction cup (64) away from a surface of the bag body (100).

3. The resin bag manufacturing equipment according to claim 1, wherein the clamp member (13) is adapted for clamping the bag body (100) from both sides of the plate (14) inserted into the opening (101) and comprises a protrusion (17) designed to dig into the bag body (100).

4. The resin bag manufacturing equipment according to claim 1, wherein the port preheater (76) comprises a port rotation mechanism (78) for rotating the port holder (73) holding the port (200).

5. The resin bag manufacturing equipment according to claim 1, wherein the bag body bonding apparatus (30) and the cutting apparatus (30) share a die (31A, 31B) having a bonding part (32) for bonding the film (F) and a cutting part (33) for cutting the film (F),
the cutting part (33) being adapted for cutting the film (F) by leaving a portion of the film (F) in a thickness direction and keeping the mutually neighboring bag bodies (100) connected, and
a separator (50) is further provided in a post-process of the cutting apparatus (30) for separating the mutually neighboring bag bodies (100) which are connected through the portion of the film (F) in the thickness direction.

## Patentansprüche

1. Harzbeutelherstellungsausrüstung zur Herstellung eines Harzbeutels, der mit einer Flüssigkeit befüllt wird, umfassend:
eine Folienzuführvorrichtung (20), die ein Paar Folien auf einer Folienmaterialrolle (21) hält;
eine Beutelkörper-Verbindungsvorrichtung (30) zum Formen einer Öffnung (101) an nur einer Seite eines Paares Folien (F), die von der Folienmaterialrolle (21) abgespult werden, und zum Verbinden eines verbleibenden gesamten Umfangs, um einen Beutelkörper (100) zu formen;
eine Schneidevorrichtung (30) zum Schneiden der Folien (F) längs einer äußeren Form des Beutelkörpers (100);
einen Öffner (60) zum Öffnen der Öffnung des Beutelkörpers (100);
eine Anschlussverbindungsvorrichtung (80) zum Einfügen eines rohrförmigen Anschlusses (200) in die durch den Öffner (60) geöffnete Öffnung (101) und zum Verbinden der Öffnung (101) und des Anschlusses (100);
eine Anschlussübertragungsvorrichtung (70), die einen Anschlusshalter (73) umfasst, in den der rohrförmige Anschluss, der in die Öffnung (101) des Beutelkörpers (100) durch die Anschlussverbindungsvorrichtung (80) einzusetzen ist, angepasst ist, eingesetzt und durch die Anschlussverbindungvorrichtung (80) gehalten zu werden, und zum Übertragen des Anschlusses (200), der von dem Anschlusshalter (73) gehalten wird; und
einen Anschlussvorwärmer (76) zum Vorwärmen des Anschlusses (200), der durch den Anschlusshalter (73) der Anschlussübertragungsvorrichtung (70) gehalten wird, bevor der Anschluss (200) zur Anschlussverbindungsvorrichtung (80) übertragen wird,
wobei der Öffner (60) umfasst:
ein Paar Plattenelemente (63), das gegen beide Seiten der Öffnung (101) auf beiden Flächen des Beutelkörpers (100) gepresst wird; und
einen breitseitigen Annäherungsmechanismus (66) zum Bewegen der Plattenelemente (63) auf beiden Seiten der Öffnung (101) zu einem zentralen Abschnitt der Öffnung (101), während die Plattenelemente (63) gegen den Beutelkörper (100) gepresst werden und zum Öffnen der Öffnung (101),
wobei:
die Anschlussverbindungsvorrichtung (80) angepasst ist zum Einfügen des von dem Anschlussvorwärmer (76) vorgewärmten und von dem Anschlusshalter (73) gehaltenen Anschluss (200) in die Öffnung (101) des Beutelkörpers (100) und zum Ausführen der Verbindung;
**dadurch gekennzeichnet, dass**
die Anschlussübertragungsvorrichtung (70) angepasst ist zum Übertragen des Beutelkörpers (100) dorthin, wo die Öffnung (101) und der Anschluss (200) während des Haltens des Anschlusses (200) zu einem Post-Process verbunden werden; wobei
die Harzbeutelherstellungsausrüstung weiter eine Beutelkörperübertragungsvorrichtung (11) mit einem Endlosgurt (12) zum Übertragen des Beutelkörpers (100) von der Beutelkörperverbindungsvorrichtung (30) zu dem Öffner (60) umfasst; wobei
die Beutelkörperübertragungsvorrichtung (11) eine flache Platte (14) umfasst, die in die Öffnung (101) eingefügt wird, und ein Klemmelement (13) zum Klemmen des Beutelkörpers (100) von beiden Flächen, und die Beutelkörperverbindungsvorrichtung (30) angepasst ist zum Ausführen der Verbindung mit der zwischen dem Paar Folien (F) eingefügten Platte (14); und
der Öffner (60) angepasst ist zum Halten des Beutelkörpers (100) und zum Öffnen der Öffnung (101), während der Beutelkörper (100) von der Beutelkörperübertragungsvorrichtung (11) zu der Anschlussverbindungvorrichtung (80) übertragen wird.

2. Harzbeutelherstellungsausrüstung nach Anspruch 1, wobei der Öffner (60) umfasst:
einen Saugnapf (64) zum Ansaugen des Beutelkörpers (100) in einen zentralen Abschnitt des Paares Plattenelemente (63); und
eine Saugnapf-Antriebsvorrichtung (67) zum Anheben des Saugnapfes (64) weg von einer Fläche des Beutelkörpers (100).

3. Harzbeutelherstellungsausrüstung nach Anspruch 1, wobei das
Klemmelement (13) angepasst ist zum Klemmen des Beutelkörpers (100) von beiden Seiten der Platte (14), die in die Öffnung (101) eingefügt ist, und eine zum Eingraben in den Beutelkörper (100) bestimmte Vorwölbung (17) umfasst.

4. Harzbeutelherstellungsausrüstung nach Anspruch 1, wobei der Anschlussvorwärmer (76) eine Anschlussdrehvorrichtung (78) zum Drehen des Anschlusshalters (73) umfasst, der den Anschluss (200) hält.

5. Harzbeutelherstellungsausrüstung nach Anspruch 1, wobei die Beutelkörper-Verbindungsvorrichtung (30) und die Schneidevorrichtung (30) eine gemeinsame Matrize (31A, 31B) aufweisen, die einen Verbindungsteil (32) zum Verbinden der Folie (F) und einen Schneideteil (33) zum Schneiden der Folie (F) aufweist,
wobei der Schneideteil (33) angepasst ist zum Schneiden der Folie (F) unter Belassen eines Abschnitts der Folie (F) in einer Dickenrichtung und Verbundenhalten der einander benachbarten Beutelkörper (100), und weiter ein Abscheider (50) in einem Post-Process der Schneidevorrichtung (30) zum Trennen der einander benachbarten Beutelkörper (100) vorgesehen ist, die durch den Abschnitt der Folie (F) in der Dickenrichtung verbunden sind.

## Revendications

1. Équipement de fabrication de sac en résine destiné à fabriquer un sac en résine dans lequel un fluide est chargé, comprenant :
un dispositif d'alimentation de film (20) maintenant une paire de films sur un rouleau de matériau de film (21) ;
un appareil de liaison de corps de sac (30) pour former une ouverture (101) sur un seul côté d'une paire de films (F) déroulés du rouleau de matériau de film (21) et pour lier un périmètre complet restant pour former un corps de sac (100) ;
un appareil de découpage (30) pour découper les films (F) le long d'une forme extérieure du corps de sac (100) ;
un dispositif d'ouverture (60) pour ouvrir l'ouverture du corps de sac (100) ;
un appareil de liaison d'orifice (80) pour insérer un orifice tubulaire (200) dans l'ouverture (101) ouverte par le dispositif d'ouverture (60) et pour lier l'ouverture (101) et l'orifice (100) ;
un appareil de transfert d'orifice (70) qui comprend un dispositif de maintien d'orifice (73) dans lequel l'orifice tubulaire à insérer dans l'ouverture (101) du corps de sac (100) par l'appareil de liaison d'orifice (80) est apte à être inséré et maintenu par l'appareil de liaison d'orifice (80) et destiné à transférer l'orifice (200) maintenu par le dispositif de maintien d'orifice (73) ; et
un dispositif de préchauffage d'orifice (76) pour préchauffer l'orifice (200) maintenu par le dispositif de maintien d'orifice (73) de l'appareil de transfert d'orifice (70) avant le transfert de l'orifice (200) à l'appareil de liaison d'orifice (80),
dans lequel le dispositif d'ouverture (60) comprend :
une paire d'organes de plaque (63) qui est pressée contre les deux côtés de l'ouverture (101) sur les deux surfaces du corps de sac (100) ; et
un mécanisme d'approche dans le sens de largeur (66) pour déplacer les organes de plaque (63) des deux côtés de l'ouverture (101) vers une portion centrale de l'ouverture (101) tout en pressant les organes de plaque (63) contre le corps de sac (100) et destiné à ouvrir l'ouverture (101),
dans lequel :
l'appareil de liaison d'orifice (80) est apte à insérer l'orifice (200) préchauffé par le dispositif de préchauffage d'orifice (76) et maintenu par le dispositif de maintien d'orifice (73) dans l'ouverture (101) du corps de sac (100) et à effectuer une liaison ;
**caractérisé en ce que**
l'appareil de transfert d'orifice (70) est apte à transférer le corps de sac (100), où l'ouverture (101) et l'orifice (200) sont liés, à un post-traitement tout en maintenant l'orifice (200) ; dans lequel
l'équipement de fabrication de sac en résine comprend en outre un appareil de transfert de corps de sac (11) avec une courroie sans fin (12) destiné à
transférer le corps de sac (100) de l'appareil de liaison de corps de sac (30) au dispositif d'ouverture (60) ; dans lequel
l'appareil de transfert de corps de sac (11) comprend une plaque plate (14) à insérer dans l'ouverture (101) et un organe de serrage (13) pour serrer le corps de sac (100) à partir des deux surfaces, et l'appareil de liaison de corps de sac (30) est apte à effectuer une liaison avec la plaque (14) insérée entre la paire de films (F) ; et
le dispositif d'ouverture (60) est apte à maintenir le corps de sac (100) et à ouvrir l'ouverture (101) pendant que le corps de sac (100) est transféré de l'appareil de transfert de corps de sac (11) à l'appareil de liaison d'orifice (80).

2. Équipement de fabrication de sac en résine selon la revendication 1, dans lequel le dispositif d'ouverture (60) comprend :
une ventouse (64) pour aspirer le corps de sac (100) dans une portion centrale de la paire d'organes de plaque (63) ; et
un mécanisme d'entraînement de ventouse (67) pour soulever la ventouse (64) à l'écart d'une surface du corps de sac (100).

3. Équipement de fabrication de sac en résine selon la revendication 1, dans lequel
l'organe de serrage (13) est apte à serrer le corps de sac (100) à partir des deux côtés de la plaque (14) insérée dans l'ouverture (101) et comprend une protubérance (17) conçue pour pénétrer dans le corps de sac (100).

4. Équipement de fabrication de sac en résine selon la revendication 1, dans lequel le dispositif de préchauffage d'orifice (76) comprend un mécanisme de rotation d'orifice (78) destiné à faire tourner le dispositif de maintien d'orifice (73) maintenant l'orifice (200).

5. Équipement de fabrication de sac en résine selon la revendication 1, dans lequel l'appareil de liaison de corps de sac (30) et l'appareil de découpage (30) partagent un moule (31A, 31B) comportant une partie de liaison (32) destinée à lier le film (F) et une partie de découpage (33) destinée à découper le film (F),
la partie de découpage (33) étant apte à découper le film (F) en laissant une portion du film (F) dans un sens d'épaisseur et en maintenant les corps de sac réciproquement voisins (100) raccordés l'un à l'autre, et
un séparateur (50) est en outre prévu dans un post-traitement de l'appareil de découpage (30) pour séparer les corps de sac (100) réciproquement voisins qui sont raccordés par l'intermédiaire de la portion du film (F) dans le sens d'épaisseur.
